# EUROPEAN PATENT APPLICATION

(11) **EP 1 600 736 A1**
(43) Date of publication of application: **30.11.2005**
(21) Application number: 05011159.0
(22) Date of filing: 23.05.2005
(51) Int. Cl.: G01D 3/02, G01D 3/024

(54) **Wirelessly and passively programmable sensor**

(30) Priority: 24.05.2004 US 850987
(71) Applicant: Eaton Corporation, Cleveland, Ohio 44114-2584 (US)
(72) Inventor: Christensen, Timothy Alan, Camano Island WA 98282 (US)
(74) Representative: Geyer, Ulrich F.

(57) **Abstract**

A programmable device (10), such as an intelligent sensor that when installed communicates sensing results to other apparatus via a cable, include a wireless programming circuit (50). That circuit (50) enables configuration data to be downloaded into the programmable device via a wireless signal thereby eliminating the need to make physical electrical connections. The programmable device derives power for the programming function from the energy of the wireless signal. This enables the configuration to be performed without removing the programmable device from a package (94) in which it is stored.

## Description

### Cross-Reference to Related Applications

Not Applicable

### Statement Regarding Federally Sponsored Research or Development

Not Applicable

### Background of the Invention

### 1. Field of the Invention

The present invention relates to programmable devices, such as intelligent sensors for a physical parameter; and more particularly to programming performance characteristics and operating functions of such devices.

### 2. Description of the Related Art

Intelligent sensors have been developed for detecting and measuring various physical parameters, such as temperature, pressure, presence of objects, and the like. These sensors have wide application in industrial control systems to provide input signals to a computer that controls the operation of a machine or similar apparatus. Instead of merely producing an electrical signal which directly corresponds to the physical parameter being sensed, the functionality of the intelligent sensor may be configured to respond only to the respective parameter within a defined range of values. In addition, the response of a sensor for detecting the presence of an object can be set to detect only objects within a given range of distances from the sensor.

The intelligent sensors also may have a port for connection to a local area network or other communication bus so that the device can transmit the results of its sensing to one or more remotely located apparatus. In this instance, the sensor has to be configured for the particular communication protocol used by that network.

The simplest form of an intelligent sensor is permanently configured with a specific set of operational characteristics. Thus, the proper sensor model having the appropriate functional characteristics must be obtained for a particular installation. If a different operational characteristics are required, the sensor must be replaced with a model having those characteristics. This paradigm requires the manufacturer to produce a wide variety of sensors which are configured for various operating ranges and other performance characteristics. It also necessitates that numerous sensor models be kept in inventory. Similarly, a facility having control systems which employ many sensors has to keep a relatively large number as spare parts, as a particular sensor model is only interchangeable with sensors having the same characteristics.

In view of this, programmable sensors have been developed in order to reduce the number of sensor models that are required to be manufactured and inventoried. Now, the specific performance characteristics and functionality of a programmable sensor are configured for its particular application, often at time of shipment to the end user. As a consequence, one model of a programmable sensor can be used in place of a plurality of permanently programmed sensor models.

Heretofore, the configuration was performed by connecting the programmable sensor to a power supply and to a programming device, such as a personal computer. Once the sensor was activated, configuration data was downloaded from the programming device into a non-volatile memory in the sensor. Although this greatly reduced the number of individual sensor models which had to be produced and kept in inventory, programming a sensor was manual labor intensive. In order for a distributor perform the configuration at a warehouse, each sensor had to be removed from its box, connected to a power supply and to a programming device. When the configuration process was completed, the sensor had to be disconnected from the programming equipment and repackaged.

Thus, there is a need to simplify the programming and configuring of intelligent sensors and other types of programmable devices.

### Summary of the Invention

A programmable device comprises a control circuit and a memory that contains configuration data which defines the device's operational characteristics. A programming circuit, coupled to the control circuit, includes a receiver for a first wireless signal that carries a set of configuration data. Circuitry is connected to the receiver for controlling the memory to store the set of configuration data. A power supply is provided which derives electrical power from the first wireless signal and provides that electrical power to components of the programming circuit.

One embodiment of the programmable device further comprises a data port for connection to a cable through which another set of configuration data is sent. In this device the control circuit oversees storage of this other set of configuration data in the memory.

In another variation of the present invention, the programming circuit is able to read data from the memory and transmit that data via a second wireless signal.

The operation of this type of programmable device can be configured without having to physically connect power or data cables to the device. The configuration may even occur without opening a package containing the programmable device. This latter capability greatly facilitates programming the device at a distributor prior to shipment to an end user.

### Brief Description of the Drawings

FIGURE 1 is a block diagram of a programmable sensor that incorporates the present invention;

FIGURE 2 is a schematic circuit diagram of a transducer in the programmable sensor;

FIGURE 3 is a block diagram of an apparatus for exchanging configuration data with the programmable sensor;

FIGURE 4 illustrates a first setup for writing and reading the configuration data to and from the programmable sensor; and

FIGURE 5 illustrates a second setup for writing and reading the configuration data to and from the programmable sensor.

### Detailed Description of the Invention

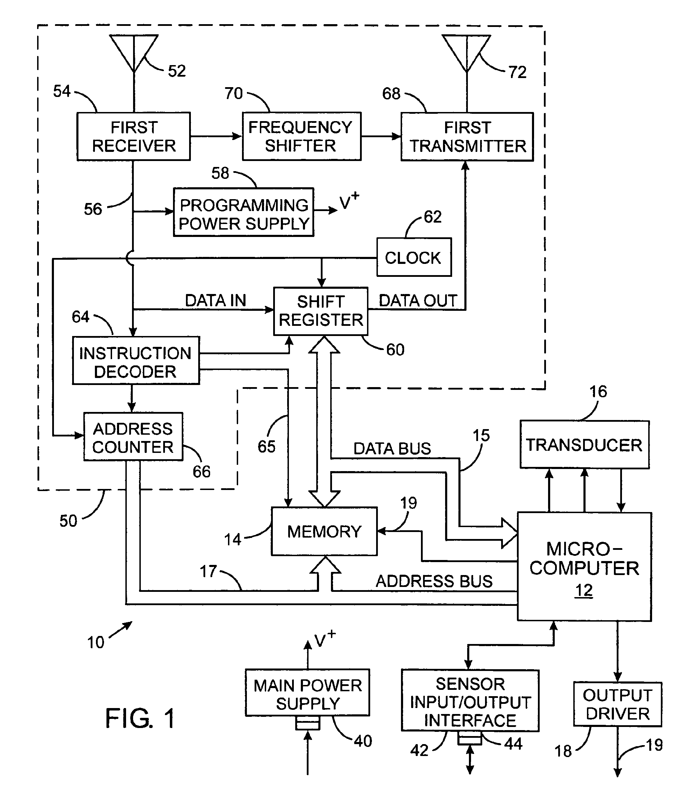

With initial reference to Figure 1, the present invention will be described in the context of a proximity sensor 10 for detecting the presence of objects near that sensor. The details of a sensor of this type are described in U.S. Patent No. 6,650,111. However, will be apparent to those skilled in the art that the present apparatus and method for programming the characteristics and functionality of a device can be applied not only to a wide range of sensor types, but also to programmable devices in general.

The sensor 10 has a control circuit 11 that includes a microcomputer 12 which governs its overall operation. The microcomputer 12 is connected by a data bus 15 and an address bus 17 as well as conventional control lines 19 to a memory 14 which stores the software program that the microcomputer executes to carry out the sensor functions. The memory 14 also stores data that is used and generated by the microcomputer 12. As will be described in greater detail, data configuring the functionality of the sensor is also stored in the memory 14. Alternatively, the microcomputer 12 may have an internal memory for storing the programs and the external memory 14 contains only the data that defines the functionality and operational characteristics.

A transducer 16 is connected to and controlled by the microcomputer 12. The transducer 16 can take on any of many forms that have been developed to detect a particular parameter to which the sensor is intended to respond. For the ease of illustration, the present invention will be described in the context of a proximity sensor in which the transducer 16 detects the presence or absence of nearby metal objects. The output signal from the transducer 16 is processed by the microcomputer 12 to determine whether that signal indicates a desired characteristic of the physical parameter, in which case the microcomputer operates an output driver 18 to produce a true output signal from the sensor.

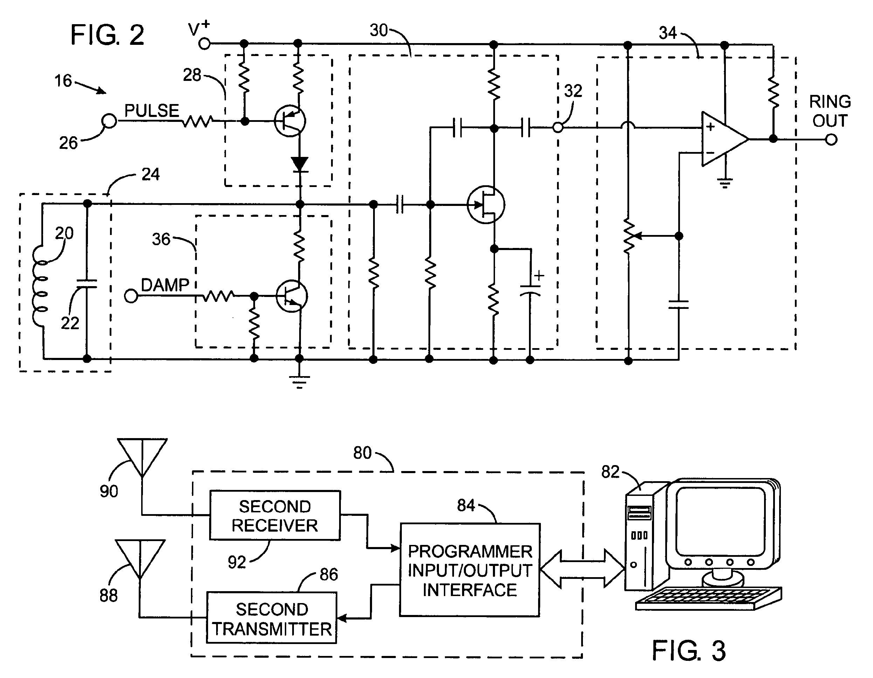

The transducer 16 for the proximity sensor has a structure shown in Figure 2. A coil 20 is connected in parallel with a capacitor 22 to form a resonant circuit 24. The transducer 16 receives a signal, designated PULSE, generated by the microcomputer 12 at terminal 26. The PULSE signal is coupled to a drive circuit 28 which responds by applying a positive voltage pulse to the resonant circuit 24. Each positive voltage pulse produces ringing in the resonant circuit 24 which ringing decays at a rate that is a function of the amount of metal in proximity to the coil 20.

The resonant circuit 24 also is connected to an input of an amplifier 30 that produces an amplified version of the ringing signal at a node 32 which is connected to a comparator 34. The comparator 34 compares the amplified signal to a reference level and generates a signal designated RING OUT which is applied to an input of the microcomputer 12.

The microcomputer 12 counts the pulses of the RING OUT signal to determine the signal decay rate, as indicated by the number of pulses that exceed a predefined threshold signal level. By analyzing the decay rate the microcomputer is able to determine whether a metal object is in close proximity to the transducer coil 20.

The microcomputer 12 also produces an active DAMP signal that is applied to a damping section 36 of the transducer 16 which changes the Q factor of the resonant circuit 43. That action of the damping section 36 immediately terminates the ringing in the resonant circuit 24 and further oscillations which produce RING OUT pulses from the comparator 34.

The operation of the microcomputer 12 in analyzing the RING OUT signal is configured by configuration data stored within the memory 14. As used herein, the term "configuration data" refers to data and programs which define the operation of a programmable device, such as the sensor 10. For example, that configuration data determines the distance range within which the metal object must be with respect to the transducer coil 20 in order for the microcomputer to determine that an object is present, and thus produce a true sensor output signal. Careful configuration of that distance range enables the sensor 10 to discriminate between objects that are desired to be detected and other objects which are nearby.

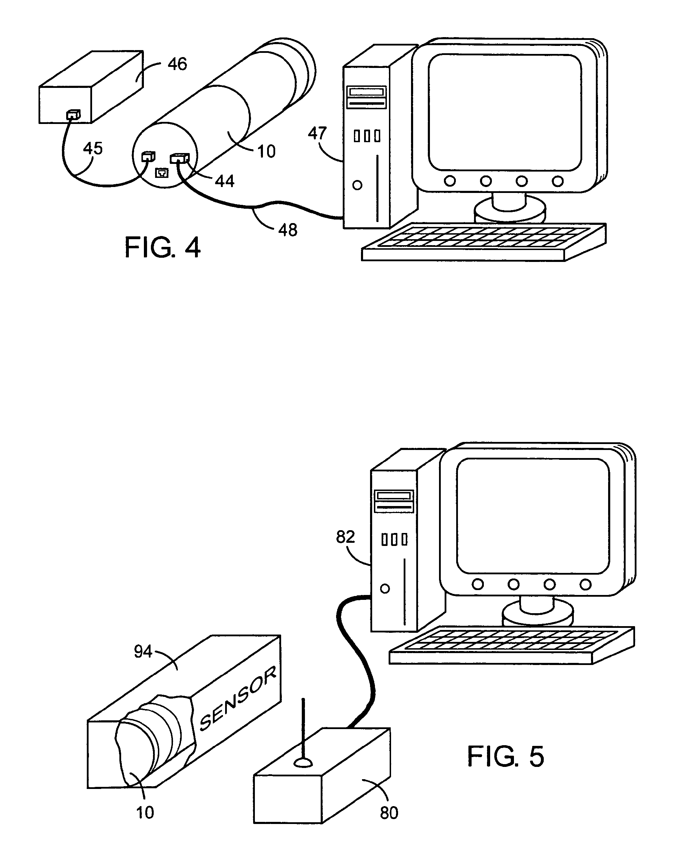

As shown in Figure 4, programming the sensor 10 with configuration data can be performed in a conventional manner by connecting the main power supply 40 to a source of electrical power 46 by means of a wire 45. A programming device 47, such as a personal computer, is connected by a data cable 48 to a port 44 of a sensor input/output interface 42 that is coupled to the microcomputer 12 in Figure 1. These connections permits parameter values and other configuration information to be exchanged between the programming device 47 and the sensor 10 where microcomputer 12 which handles writing and reading of the memory 14.

With continuing reference to Figure 1, the programmable sensor 10 also contains a passive radio frequency programming circuit 50 through which configuration data and other characteristics of the sensor 10 also can be read from and written into the sensor. This programming circuit 50 enables those operations to be performed without connecting the sensor to an external power supply or other cables. The sensor 10 may even be programmed while still in a package.

The programming circuit 50 includes a first antenna 52 that is coupled to a first receiver 54 which is tuned to a specific radio frequency (RF) used to send data and programming commands to the sensor 10. Some of the energy from the received radio frequency signal is fed to a programming power supply 58 which utilizes that energy to produce electrical current for powering the components of the programming circuit 50 and the sensor memory 14 during the wireless data reading and writing operations, as will be described.

The data transmitted via the RF signal is serially encoded using a format similar to that which is well known for programming radio frequency transponder tags and labels. The first receiver 54 extracts the data bits from the wireless radio frequency signal and applies those bit onto a conductor 56 which is connected to a shift register 60. The signal produced on conductor 56 by the first receiver 54 contains instructions for writing and reading data to and from the sensor 10, as well as data received via the wireless RF signal. An instruction decoder 64 recognizes specific data bit patterns on conductor 56 as instructions that command different functions of the sensor during the programming mode. One such instruction commands that data be written into the memory 14, while another commands reading of data from that memory. The instruction decoder 64 produces a signal on line 65 that is applied to the memory 14 indicating whether data are be written into or read from the memory. Another signal from the instruction decoder 64 controls the operation of an address counter 66 that produces a sequence of addresses on the address bus 17 during read and write operations. The address counter 66 is incremented by a signal from a clock 62 which operates upon being powered by current from the programming power supply 58.

The first receiver 54 also extracts serial configuration data from the received RF signal and applies that data onto conductor 56 which also is connected to a serial input of a shift register 60. The shift register 60 also has a serial output and a parallel port connected to the sensor data bus 15 and functioning for both data input and output. The flow of data through the shift register 60 is controlled by the instruction decoder 64 and pulses from the clock 62.

The serial data output of the shift register 60 is connected to the data input of a radio frequency first transmitter 68. The RF carrier for the first transmitter 68 is derived from the first receiver 54 which produces an output signal corresponding to the carrier frequency of the signal received by the first antenna 52. That output signal is applied to a frequency shifter 70 which produces a signal at a second radio frequency that is applied to the first transmitter 68 as an RF carrier. This second radio frequency is used by the first transmitter 68 to transmit data from the programming circuit 50. Specifically, the first transmitter 68 modulates that second radio frequency signal with the data received from the output of the shift register 60 and applies the resultant signal to a second antenna 72. Alternatively, a single antenna may be connected to both the first receiver 54 and the first transmitter 68.

The radio frequency programming circuit 50 in the sensor 10 communicates with an external radio frequency programmer 80 shown in Figure 3. The programmer 80 is connected to a personal computer 82, a PDA or other type of computer device, which allows a user to read and alter the configuration data stored within the memory 14 of the sensor 10. Specifically, the programmer 80 has an input/output interface 84 which handles communication with the personal computer 82. Alternatively, the programmer input/output interface 84 may connect the programmer 80 to a local area network within the facility at which programming is to occur in order to exchange sensor configuration data with a remotely located computer. Use of that local area network allows a single computer to configure a plurality of sensors simultaneously using programmers at different locations within that facility.

The programmer input/output interface 84 is connected to a second transmitter 86 which receives data produced at the personal computer 82, That data are modulated onto a radio frequency signal that is transmitted to the sensor 10 via a transmit antenna 88. The programmer 80 also has a receive antenna 90 that is connected to a second receiver 92 which extracts the data modulated on the received radio frequency signal and applies that data via the programmer input/output interface 84 to the personal computer 82. A single antenna may be used in place of separate transmit and receive antennas 88 and 90.

With reference to Figure 5, a sensor 10 to be programmed is brought within the signal range of the programmer 80. Because physical connection to the sensor 10 is not required to read or write configuration data, and because the sensor does not have to be connected to an external power supply by a wire for these operations to occur, the sensor can remain in an unopened package 94. Note that the package 94 has been cut away to expose the sensor 10 only for illustration purposes. This feature of the present invention allows sensors to be easily programmed by the manufacturer at the end of an assembly line or at a distribution warehouse.

With the sensor within the range of the programmer 80, the user enters the appropriate commands in to the keyboard of the personal computer 82, commanding for example that configuration data be downloaded from the personal computer 82 into the sensor 10. That configuration data may either be entered by the user via the keyboard of the personal computer 82 or configuration data stored previously in the personal computer may be used. When the download operation commences, the personal computer generates a write command to the programmer 80 which is transmitted wirelessly via the radio frequency signal to the programming circuit 50 within the sensor 10.

Referring to Figure 1, the sensor's first receiver 54 extracts the serially encoded write command from that the radio frequency signal and applies the command onto conductor 56. The instruction decoder 64 recognizes this signal as a write command and sends the corresponding control signals to the shift register 60, the address counter 66 and the memory 14. Specifically, the memory 14 is placed into the write mode and the address counter 66 is initialized to the first address of the memory locations that contain the configuration data.

Next, the personal computer 82 begins transferring the configuration data to the sensor via the programmer 80. Each data word is serially transmitted wirelessly by the programmer 80 to the programming circuit 50 in the sensor. As the first receiver 54 detects each data bit in that signal, the data bit is sent via conductor 56 to the data input of the shift register 60. After an entire word of data has been clocked into the shift register, that word is conveyed via the data bus 15 to the memory 14 where it is stored in the presently addressed location. Then, the address counter 66 is incremented to access the next memory location for storing a subsequent word of data. This process of sequentially writing data into the configuration section of memory 14 continues until either the address counter 66 reaches the final address of configuration data storage locations, or an end of data command is received from the personal computer 82.

The configuration data stored in the memory 14 can be verified by placing the programming circuit 50 into the read mode in which data are read from the memory and wirelessly transmitted to the programmer 80 and personal computer 82. This readout process also can be employed to obtain the configuration data from one sensor for use in cloning another sensor. It order to read the configuration data from the sensor 10, the personal computer 82 sends a read command to the programmer 80 which relays the read command via the RF signal to the programming circuit 50 in the sensor.

At the sensor the first receiver 54 detects the read command which then is applied to the instruction decoder 64. The instruction decoder responds by producing control signals which place the memory 14 in the data read mode and initializes the address counter 66. As each address is applied from the address counter 66 to the memory 14 via the address bus 17, the data word in the associated memory location is supplied via the data bus 15 to the parallel port of the shift register 60. That data word is then serially clocked from the shift register 60 onto the data output line to the first transmitter 68.

The data word then is carried by the radio frequency signal transmitted from the second antenna 72 to the programmer 80 located adjacent the sensor 10. The second receiver 92 in the programmer 80 (see Figure 3) detects the data carried by the radio frequency signal and the data are sent through the programmer input/output interface 84 to the personal computer 82. At the personal computer 82 received configuration data are stored and may be displayed to the user. The personal computer 82 may perform other operations on the received configuration data, such as comparing it to a stored set of data in order to verify whether the configuration data in the sensor is correct.

The ability to acquire data from a sensor via the wireless programming circuit 50 has other advantages. For example, malfunction of the microcomputer 12, main power supply 40 or the input/output interface 42 of the sensor 10 can preclude conventional access to the memory 14 via a cable as shown in Figure 4. In this situation, the radio frequency programming circuit 50, which has independent access to the memory 14, can be used to extract the configuration data from the sensor so that another sensor can be cloned as a replacement.

The reading of configuration data from a sensor can also be employed to verify the compatibility of that sensor as a replacement for a specifically programmed sensor on an existing machine. Such verification of the programming of the sensor overcomes the problems associated with incorrect labeling of a device. In addition, the memory contents can be read from the sensor 10 without disconnecting the device from a machine in which it is installed.

The foregoing description was primarily directed to a preferred embodiment of the invention. Although some attention was given to various alternatives within the scope of the invention, it is anticipated that one skilled in the art will likely realize additional alternatives that are now apparent from disclosure of embodiments of the invention. Accordingly, the scope of the invention should be determined from the following claims and not limited by the above disclosure.

## Claims

1. A programmable sensor (10) comprising:
a transducer (16) that responds to a physical parameter;
a control circuit (11) connected to the transducer and having a memory (14) for containing data which defines operational characteristics of the programmable sensor (10); and
a programming circuit (50) that includes a receiver (54) for a first wireless signal that carries configuration data, and circuitry (60, 66) connected to the receiver for storing the configuration data in the memory (14) to define operational characteristics of the programmable sensor (10).

2. The programmable sensor (10) as recited in claim 1 wherein the programming circuit (50) further comprises a transmitter (68) for sending the configuration data on a second wireless signal; and wherein the circuitry (60, 66) reads the configuration data from the memory (14) and sends the configuration data to the transmitter.

3. The programmable sensor (10) as recited in claim 1 further comprising a power supply (58) which derives electrical power from the first wireless signal and provides that electrical power to energize components of the programming circuit (50).

4. The programmable sensor (10) as recited in claim 1 wherein the programming circuit (50) further comprises an instruction decoder (64) which responds to commands, that are carried by the first wireless signal, by controlling operation of the programming circuit (50).

5. The programmable sensor (10) as recited in claim 1 further comprising a main power supply (40) for connection by a wire to an external source of electrical power and which supplies that electrical power to the control circuit (11).

6. The programmable sensor (10) as recited in claim 1 further comprising a data port (44) coupled to the control circuit (11) for connection to a cable which carries a set of configuration data from an external programmer, wherein the control circuit stores the set of configuration data in the memory (14).

7. A programmable device (10) comprising:
a data port (44) for connection to a cable which carries a first set of configuration data from an external programmer (47);
a control circuit (11) connected to the data port (44) and having a memory (14) for containing data that defines operational characteristics of the programmable device (10), the control circuit storing the first set of configuration data in the memory; and
a programming circuit (50) that includes a receiver (54) for a wireless signal that carries a second set of configuration data, circuitry (60, 66) connected to the and to the memory (14) for storing the second set of configuration data in the memory to define operational characteristics of the programmable device (10), and a power supply (58) which derives electrical power from the first wireless signal and provides that electrical power to components of the programming circuit.

8. The programmable device (10) as recited in claim 7 wherein the programming circuit (50) further comprises a transmitter (68) for sending the configuration data on a second wireless signal; and wherein the circuitry (60, 66) reads the configuration data from the memory (14) and sends that configuration data to the transmitter.

9. The programmable device (10) as recited in claim 7 wherein the programming circuit (50) further comprises an instruction decoder (64) that responds to commands, that are carried by the first wireless signal, by controlling operation of the programming circuit (50).

10. The programmable device (10) as recited in claim 7 further comprising a main power supply (40) for connection by a wire to an external source of electrical power and which supplies that electrical power to the control circuit (11).

11. A method for configuring operation of a programmable device (10) comprises:
providing a port (44) on the programmable device (10) for connection to a cable through which data are exchanged with an external apparatus;
placing the programmable device (10) within range of a first wireless signal transmitted from a programmer (80);
transmitting configuration data from the programmer (80) via the first wireless signal wherein the configuration data specifies operational characteristics of the programmable device (10);
receiving the wireless signal at a programming circuit (50) in the programmable device (10);
extracting the configuration data from the first wireless signal; and
storing the configuration data in a memory (14) of the programmable device (10).

12. The method as recited in claim 11 further comprising deriving electrical power from the first wireless signal received by the programmable device (10) and using the electrical power to energize components of the programmable device.

13. The method as recited in claim 11 wherein the method is performed while the programmable device (10) is inside an unopened package (94).

14. The method as recited in claim 11 further comprising receiving set of configuration data from an external programmer (47) through a cable connected to the port (44); and storing the set of configuration data in the memory (14).

15. The method as recited in claim 11 further comprising providing a main power supply (40) for connection by a wire (45) to an external source (46) of electrical power; and supplying that electrical power to components of the programmable device (10).

16. The method as recited in claim 11 further comprising reading configuration data from the memory (14); and sending that configuration data on a second wireless signal.
